# EUROPEAN PATENT SPECIFICATION

(11) **EP 1 684 535 B1**
(45) Date of publication and mention of the grant of the patent: **05.03.2008**
(21) Application number: 05000708.7
(22) Date of filing: 14.01.2005
(51) Int. Cl.: H04Q 7/38

(54) **System and method for remotely locating a lost mobile communication device**
System und Verfahren zur Fernlokalisierung einer verlorenen mobilen Kommunikationsvorrichtung
Système et procédé pour localiser à distance un dispositif de communication mobile perdu

(43) Date of publication of application: 26.07.2006
(60) Divisional application: 07120185.9
(73) Proprietor: Research In Motion Limited, Waterloo, Ontario N2L 3W8 (CA)
(72) Inventor: Nagy, Tom, Waterloo Ontario N2L 2N4 (CA); Owen, Russel N., Waterloo Ontario N2K 4B8 (CA)
(74) Representative: Reichl, Wolfgang

(56) References cited:
- US-A1- 2004 180 673
- US-A1- 2004 203 601

## Description

Modem mobile communication devices have many alerting or notification mechanisms, such as an audible ring tone, visible signal, vibration motor, etc. Oftentimes, however, users of these devices will disable some or all of these notification mechanism. For example, if the user is in a movie theatre, it is common practice to turn off these notification mechanisms so as not to disturb the other movie patrons. There are many other examples of situations where the user may disable the device notifications. Subsequently, then, if the user misplaces their device (with the notifications disabled) it may become difficult to locate the device. This application is directed to solving the problem of how to locate a lost mobile communication device, particularly when the device notifications have been disabled by the user.

US 2004/0180673 A1 discloses a method of operating a wireless network for locating a misplaced mobile station and preventing its unauthorized use. The wireless network includes a base station. The network and base station transmit a misplaced mobile station signal to a mobile station, causing a misplaced mobile station to ring at high volume, display a text message, emit an audio message, and deactivate normal mobile station functions.

EP 0724 244 A1 discloses that a predetermined lost pager code (LPC) is send by a user to a lost pager. After receiving and detecting the LPC at the lost pager the alert mode of the pager is set to audible alert. Then the pager alert is activated to provide an audible alert to facilitate locating the lost pager. Once a reset switch is pressed, the alert is terminated and the pager returns to the previously selected alert mode.

According to the present invention, the above mentioned problem is solved by a method of locating a wireless communication device according to claim 1 and by a system according to claim 5.

### THE DRAWINGS

- Figure 1: is a system diagram of a system for remotely locating a lost mobile communication device;
- Figure 2: is a block diagram of an exemplary mobile communication device that may operate in conjunction with the system disclosed in Figure 1;
- Figure 3: is a flow diagram of an exemplary method of remotely locating a lost mobile communication device.

### DETAILED DESCRIPTION

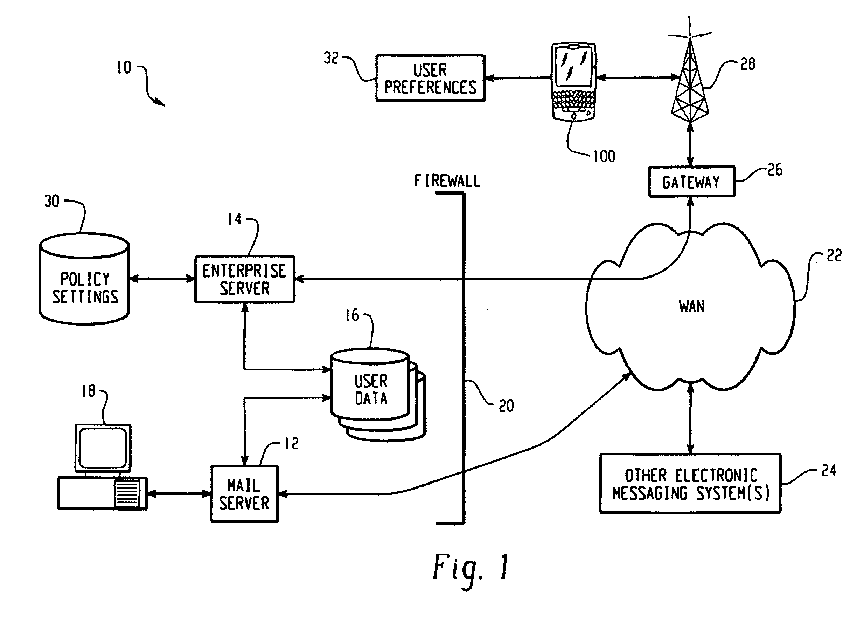

Turning now to the drawing figures, which describe an example of the invention described in this application, Figure 1 is a system diagram 10 of a system for remotely locating a lost mobile communication device. The example system 10 includes an enterprise server 14, a mail server 12, a storage medium 16 for electronic messaging (e-mail) account data, and a wireless gateway 26. Also illustrated are the mobile communication device 100, including memory for storing user preferences 32, a wireless network 28, a wide area network (WAN) 22, a firewall 20, a desktop client 18, and one or more other electronic messaging systems 24.

The mail server 12 may include electronic messaging software executing on a computer within a local area computer network (LAN). The mail server 12 is coupled to local network devices 14, 16, 18 via the LAN, and is coupled to remote network devices 24 via the WAN 22. The LAN and WAN 22 may be separated by a firewall 20.

The mail server 12 maintains an electronic mail (e-mail) account within the e-mail account database 16 for each desktop client 18 in the LAN. The e-mail account database 16 may be one or more storage devices coupled to the mail server 12, and may be included within the same network device as the mail server 12 or in one or more separate devices within the LAN. The desktop client 18 may be one of a plurality of computers (e.g., personal computers, terminals, laptop computers, or other processing devices) coupled to the mail server 12 via the LAN that execute electronic messaging software to send and receive electronic messages (e-mail) via the mail server.

Electronic messages sent from the desktop client 18 are stored by the mail server 12 in an outgoing message storage location (an "outbox") within a corresponding e-mail account 16. If the outgoing message is addressed to an e-mail account within the LAN, then the mail server 12 delivers the message to an incoming message storage location (an "inbox") in the appropriate e-mail account 16. If the outgoing message is addressed to an e-mail account in another electronic messaging system 24, however, then the message is delivered via the WAN 22. Similarly, incoming electronic mail (e-mail) addressed to the e-mail account 16 is received by the mail server 12 and stored to the e-mail account database 16 within the appropriate incoming message storage location ("inbox"). The incoming e-mail may then be retrieved from the e-mail account 16 by the desktop client 18, or may be automatically pushed to the desktop client 18 by the mail server 12.

The enterprise server 14 may include electronic mail (e-mail) redirection software executing on a computer within the LAN. The enterprise server 14 is operational to redirect electronic mail messages (e-mail) from the e-mail account 16 to the mobile communication device 100 and to place messages sent from the mobile communication device 20 into the e-mail account 16 for delivery by the mail server 12. The enterprise server 14 stores mobile device information, such as a wireless identification (e.g., a PIN), used to communicate with the mobile communication device 100. The enterprise server 14 may, for example, communicate with the mobile communication device 100 using a direct TCP/IP level connection with the wireless gateway 26, which provides an interface between the WAN 22 and the wireless network 28.

When an electronic message (e-mail) is received in the inbox of the e-mail account 16, the e-mail is detected by the enterprise server 14, and a copy of the message and any necessary mobile device information are sent over the WAN 22 to the wireless gateway 26. For example, the enterprise server 14 may encapsulate a copy of the message into one or more data packets along with a wireless identification (e.g., a PIN) for the mobile communication device 100, and transmit the data packet(s) to the wireless gateway 26 over a direct TCP/IP level connection. The wireless gateway 26 may then use the wireless identification and/or other mobile device information to transmit the data packets(s) containing the electronic message over the wireless network 28 to the mobile communication device 100.

The enterprise server 14 is also coupled to a policy settings data store 30, which provides provisioning data for the mobile communication devices 100 served by the system 10. A central site administrator sets, resets, alters and/or manages the provisioning data 30 in order to control the delivery of redirection services to the devices 100 which are in communication with the enterprise server 14. One such policy setting is a lost device policy. This policy setting may be activated by a central site administrator, or by some other party, either directly through interaction with the enterprise server 14, or indirectly by transmitting policy setting data to the enterprise server 14 from some remote location.

The lost device policy setting may be activated when a user of a mobile device 100 reports that its device is lost. This setting is particularly useful in the situation where the user of the lost mobile device 100 has disabled device notifications such that the user could not send a message (or place a call) to the lost device to make it reveal its location. Although the preferred method of activating the lost device policy is through a central site administrator managing the policy setting database 30, alternatively a user of the lost device could send an electronic communication to the enterprise server to cause the lost policy setting to be activated. This electronic communication could be an e-mail message, a voice message, etc.

Regardless of how the lost policy setting is activated, following activation the enterprise server 14 will transmit a remote location command to the lost mobile device 100. The mobile device receives the remote location command and, in response thereto, alters the user preferences 32 set by the user to enable notifications.

Once the user preferences 32 have been altered so as to enable notifications, the user of the mobile device 100 then subsequently calls or send a communication to the mobile device 100, thereby causing an alert mechanism such as an audible signal to be activated. In this way the user can then locate the lost device 100. Having found the device 100, the user may then be prompted by the device to indicate it has been found, such as by clicking a key or entering security credentials into the found device 100.

Electronic messages sent from the mobile communication device 100 may be encapsulated into one or more data packets along with a network identification for the enterprise server 14 and then transmitted over the wireless network 28 to the wireless gateway 26. The wireless gateway 26 may use the network identification for the enterprise server 14 to forward the data packet(s) over the WAN 22 to the enterprise server 14, preferably via a direct TCP/IP level connection. Upon receiving the data packet(s) from the wireless gateway 26, the enterprise server 14 places the enclosed electronic message (e-mail) into the outbox of the associated e-mail account 16. The mail server 12 then detects the e-mail in the outbox and delivers the message, as described above.

Security may be maintained outside of the firewall 32 by encrypting all electronic messages sent between the enterprise server 14 and the mobile communication device 100. Command data, such as the remote location command discussed above, may also be encrypted. For instance, an electronic message to be redirected to the mobile communication device 100 may be encrypted and compressed by the enterprise server 14, and the encrypted message may then be encapsulated into one or more data packets for delivery to the mobile communication device 100. To maintain security, the electronic message may remain encrypted over the entire communication path 22, 26, 28 from the enterprise server 14 to the mobile communication device 100. Similarly, electronic messages sent from the mobile communication device 100 may be encrypted and compressed by the mobile communication device 100 before being packetized and transmitted to the enterprise server 14, and may remain encrypted over the entire communication path 28, 26, 22 from the mobile communication device 100 to the enterprise server 14.

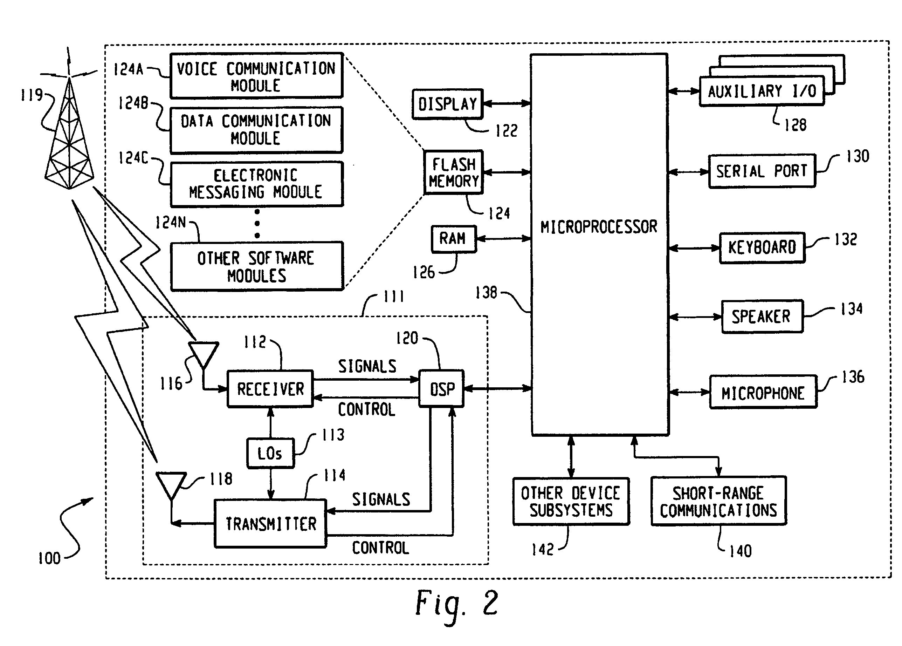

Figure 2 is a block diagram of an exemplary mobile communication device 100 that may be used in conjunction with the system discussed above. The mobile communication device 100 includes a processing subsystem 138, a communications subsystem 111, a short-range communications subsystem 140, a memory subsystem 124, 126, and various other device subsystems and/or software modules 142. The mobile communication device 100 also includes a user interface, which may include a display 122, a serial port 130, keyboard 132, a speaker 134, a microphone 136, one or more auxiliary input/output devices 128, and/or other user interface devices.

The processing subsystem 138 controls the overall operation of the mobile communication device 100. Operating system software executed by the processing subsystem 138 may be stored in a persistent store, such as a flash memory 124, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 126. Communication signals received by the mobile communication device 100 may also be stored to RAM 126.

The processing subsystem 138, in addition to its operating system functions, enables execution of software applications 124 on the device 100. A predetermined set of applications that control basic device operations, such as data and voice communications, may be installed on the device 100 during manufacture. In addition, a personal information manager (PIM) application, including an electronic messaging application, may be installed on the device.
The PIM may, for example, be operable to organize and manage data items, such as e-mail, calendar events, voice mails, appointments, and task items. The PIM application may also be operable to send and receive data items via the wireless network 119.

Communication functions, including data and voice communications, are performed through the communication subsystem 111, and possibly through the short-range communications subsystem 140. The communication subsystem 111 includes a receiver 112, a transmitter 114 and one or more antennas 116, 118. In addition, the communication subsystem 111 also includes a processing module, such as a digital signal processor (DSP) 120 or other processing device(s), and local oscillators (LOs) 113. The specific design and implementation of the communication subsystem 111 is dependent upon the communication network in which the mobile communication device 100 is intended to operate. For example, a mobile communication device 100 may include a communication subsystem 111 designed to operate within the Mobitex™ mobile communication system, the DataTAC™ mobile communication system, a GSM network, a GPRS network, a UMTS network, and/or an EDGE network.

Network access requirements vary depending upon the type of communication system. For example, in the Mobitex and DataTAC networks, mobile communication devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile communication device 100 may send and receive communication signals over the communication network 119. Signals received by the antenna 116 from the communication network 119 are routed to the receiver 112, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 119 are processed (e.g., modulated and encoded) by the DSP 120 and are then provided to the transmitter 114 for digital to analog conversion, frequency up conversion, filtering, amplification and transmission to the communication network 119 (or networks) via the antenna 118.

In addition to processing communication signals, the DSP 120 provides for receiver 112 and transmitter 114 control. For example, gains applied to communication signals in the receiver 112 and transmitter 114 may be adaptively controlled through automatic gain control algorithms implemented in the DSP 120.

In a data communication mode, a received signal, such as a text message or web page download, is processed by the communication subsystem 111 and input to the processing device 138. The received signal is then further processed by the processing device 138 for output to a display 122, or alternatively to some other auxiliary I/O device 128. A device user may also compose data items, such as e-mail messages, using a keyboard 138 and/or some other auxiliary I/O device 128, such as a touchpad, a rocker switch, a thumb-wheel, or some other type of input device. The composed data items may then be transmitted over the communication network 119 via the communication subsystem 111.

In a voice communication mode, overall operation of the device is substantially similar to the data communication mode, except that received signals are output to a speaker 134, and signals for transmission are generated by a microphone 136. Alternative voice or audio I/O subsystems, such as a voice message recording subsystem, may also be implemented on the device 100. In addition, the display 122 may also be utilized in voice communication mode, for example to display the identity of a calling party, the duration of a voice call, or other voice call related information.

The short-range communications subsystem 140 enables communication between the mobile communication device 100 and other proximate systems or devices, which need not necessarily be similar devices. For example, the short-range communications subsystem 140 may include an infrared device and associated circuits and components, or a Bluetooth™ communication module to provide for communication with similarly-enabled systems and devices.

The mobile device 100 may include a variety of notification mechanisms, such as a speaker 134 and a display 122. The speaker 134 can be used to indicate an incoming phone call or a received data item by sounding an audible alert, and the display 122 can be used to indicate the same by causing a visible alert on the display 122. The user preferences 32 shown in Figure 1 may be stored in the flash memory 124 of the device 100, and may be configured and re-configured by a user of the device via the keyboard 132 and auxiliary I/O 128 mechanisms.

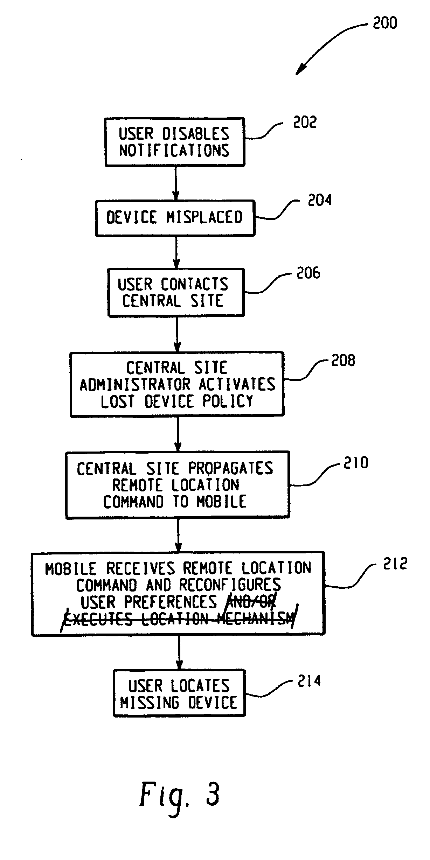

Figure 3 is a flow diagram 200 of an exemplary method of remotely locating a lost mobile communication device 100. In step 202 a user of the device 100 has disabled notifications, and in step 204 the device is subsequently misplaced. The user then contacts the central site administrator at the enterprise server 14 to indicate that the device 100 is misplaced. Contact with the enterprise server 14 may come through a telephone call, electronic message, or other form of communication with the central site administrator. Alternatively, the central site administrator may be bypassed and the user in step 206 may communicate directly to the enterprise server 14 via electronic communication. Having reported the lost device in step 206, the lost device policy for the particular device 100 is then set in the policy settings database 30 of the enterprise server 14. This setting causes the enterprise server 14 to then propagate by wireless transmission the remote location command to the mobile device 100 in step 210. The misplaced mobile device then receives the remote location command in step 212 and reconfigures, the user preferences of the device 100 so that notifications (i.e., audible, visible or tactile alerts) are enabled. Finally, in step 214, the user locates the misplaced mobile device by calling or sending a communication to the misplaced mobile device, thereby activating a notification.

The above-described embodiments of the invention are intended to be examples only. Those of skill in the art may effect alterations, modifications and variations to the particular embodiments described herein without departing from the scope of the appended claims.

## Claims

1. A method of locating a wireless communication device (100), comprising the steps of:
- contacting (206) a remote server (14) and indicating that the wireless communication device (100) is lost;
- transmitting (210) a remote location command from the remote server (14) to the wireless communication device (100) via a wireless network (28);
- receiving (212) the remote location command at the wireless communication device (100) and reconfiguring one or more user preferences (32) to enable notifications upon receiving a communication at the wireless communication device (100), wherein the step of reconfiguring one or more user preferences (32) comprises altering one or more user preferences (32) stored in a memory within the wireless communication device (100); and
- subsequently to the step of reconfiguring one or more user preferences (32), calling or sending a communication to the wireless communication device (100) by the user of the communication device (100), thereby activating a notification to enable the user to locate the communication device (100).

2. The method of claim 1, wherein the contacting step (206) comprises the step of:
- placing a telephone call to a central site administrator of the remote server (14); or sending an electronic message to the central site administrator of the remote server (14); or sending an electronic message directly to the remote server (14).

3. The method according to one of the previous claims, wherein the remote location command is transmitted by the remote server (14) over a wide area network (22) which couples the remote server (14) to the wireless network (28).

4. The method of claim 1, wherein the notifications include an audible alert and/or a visible alert and/or a tactile alert responsive to receipt of a wireless communication.

5. A system comprising:
- a remote server (14), the remote server (14) being contactable to indicate that a wireless communication device (100) is lost and the remote server (14) being configured to transmit a remote location command to the wireless communication device (100) via a wireless network (28); and
- said wireless communication device (100), the wireless communication device (100) being configured to receive the remote location command,
**characterized in that**
- the wireless communication device (100) is configured to reconfigure one or more user preferences (32) to enable notifications upon receiving a communication at the wireless communication device (100), namely to alter one or more user preferences (32) stored in a memory within the wireless communication device (100), and
- the wireless communication device (100) is further configured to receive - subsequently to the step of reconfiguring one or more user preferences (32) - a communication from the user of the communication device (100) and to activate a notification in response to the communication to enable the user to locate the communication device (100).

## Patentansprüche

1. Ein Verfahren zur Lokalisierung eines mobilen Kommunikationsgeräts (100), welches die Schritte umfasst :
- Kontaktieren (206) eines entfernten Servers (14) und angeben, dass das mobile Kommunikationsgerät (100) verloren ist;
- Übertragen (210) einer Fern-Anweisung von dem entfernten Server (14) an das mobile Kommunikationsgerät (100) über ein Mobilfunknetz (28);
- Erhalten (212) der Fern-Anweisung an dem mobilen Kommunikationsgerät (100) und Rekonfigurieren von einer oder mehrerer Nutzerpräferenzen (32), um Notifikationen bei Erhalt einer Kommunikation an dem mobilen Kommunikationsgerät (100) zu ermöglichen, wobei der Schritt des Rekonfigurierens einer oder mehrerer Nutzerpräferenzen (32) das Ändern von einer oder mehrerer Präferenzen (32), welche in einem Speicher auf dem mobilen Kommunikationsgerät gespeichert sind, einschließt;
- anschließend an dem Schritt des Rekonfigurierens von einer oder mehrerer Präferenzen (32), Anrufen oder Senden einer Kommunikation an das mobile Kommunikationsgerät (100) durch den Nutzer des Kommunikationsgeräts (100), wodurch eine Notifikation aktiviert wird, die den Nutzer dazu befähigt das mobile Kommunikationsgerät (100) zu lokalisieren.

2. Das Verfahren von Anspruch 1, wobei der Schritt des Kontaktierens (206) den Schritt enthält:
- einen Telefonanruf an einen zentralen Betriebsadministrator des entfernten Servers (14) absetzen; oder eine elektronische Nachricht an den zentralen Betriebsadministrator des entfernten Servers (14) senden; oder eine elektronische Nachricht direkt an den entfernten Server (14) senden.

3. Das Verfahren gemäß einem der vorherigen Ansprüche, wobei die Fern-Anweisung an den entfernten Server (14) über ein Weitverkehrsnetz (22) übertragen wird, welches den entfernten Server (14) an das Mobilfiulknetz (28) koppelt.

4. Das Verfahren von Anspruch 1, wobei die Notifikationen, als Antwort auf den Erhalt einer mobilen Kommunikation, einen hörbaren Alarm und/oder einen sichtbaren Alarm und/oder einen fühlbaren Alarm umfassen.

5. Ein System, welches umfasst:
- einen entfernten Server (14), wobei der entfernte Server (14) kontaktiert werden kann, um anzugeben, dass ein mobiles Kommunikationsgerät (100) verloren ist, und wobei der entfernte Server (14) derart konfiguriert ist, dass er eine Fern-Anweisung an das mobile Kommunikationsgerät (100) über das Mobilfunknetz (28) überträgt; und
- besagtes mobiles Kommunikationsgerät (100), wobei das mobile Kommunikationsgerät (100) derart konfiguriert ist, dass es die Fern-Anweisung erhalten kann,
**dadurch gekennzeichnet, dass**
- das mobile Kommunikationsgerät (100) konfiguriert ist, um eine oder mehrere Nutzerpräferenzen (32) zu rekonfigurieren, um Notifikationen bei Erhalt einer Kommunikation an dem mobilen Kommunikationsgerät (100) zu ermöglichen, und zwar um eine oder mehrere Nutzerpräferenzen (32), welche in einem Speicher in dem mobilen Kommunikationsgerät (100) gespeichert sind, zu verändern, und
- das mobile Kommunikationsgerät (100) weiter konfiguriert ist, um, anschlie-ßend an den Schritt des Rekonfiguierens von einer oder mehrere Nutzerpräferenzen (32), eine Kommunikation von dem Nutzer des Kommunikationsgeräts (100) zu erhalten und, als Antwort auf die Kommunikation, eine Notifikation zu aktivieren, um den Nutzer die Lokalisierung des Kommunikationsgeräts (100) zu ermöglichen.

## Revendications

1. Procédé de localisation d'un dispositif (100) de communication sans fil, comprenant les étapes consistant à :
- contacter (206) un serveur distant (14) et indiquer que le dispositif (100) de communication sans fil est perdu ;
- transmettre (210) une commande d'emplacement distant du serveur distant (14) au dispositif (100) de communication sans fil via un réseau (28) sans fil ;
- recevoir (212) la commande d'emplacement distant au niveau du dispositif (100) de communication sans fil et reconfigurer une ou plusieurs préférences (32) d'utilisateur pour permettre des notifications lors de la réception d'une communication au dispositif (100) de communication sans fil, dans lequel l'étape consistant à reconfigurer une ou plusieurs préférences (32) d'utilisateur comprend la modification d'une ou plusieurs préférences (32) d'utilisateur stockées dans une mémoire à l'intérieur du dispositif (100) de communication sans fil ; et
postérieurement à l'étape de reconfiguration d'une ou plusieurs préférences (32) d'utilisateur, appeler ou envoyer une communication au dispositif (100) de communication sans fil par l'utilisateur du dispositif (100) de communication sans fil, activant ainsi une notification pour permettre à l'utilisateur de localiser le dispositif (100) de communication.

2. Procédé selon la revendication 1, dans lequel l'étape (206) de mise en contact comprend l'étape consistant à :
- passer un appel téléphonique à un administrateur de site central du serveur distant (14) ; ou envoyer un message électronique à l'administrateur de site central du serveur distant (14) ; ou envoyer un message électronique directement au serveur distant (14).

3. Procédé selon l'une des revendications précédentes, dans lequel la commande de localisation distante est transmise par le serveur distant (14) sur un réseau longue distance (22) qui couple le serveur distant (14) au réseau sans fil (28).

4. Procédé selon la revendication 1, dans lequel les notifications comprennent une alarme sonore et/ou une alarme visuelle et/ou une alarme tactile en réaction à la réception d'une communication sans fil.

5. Système comprenant :
- un serveur distant (14), le serveur distant (14) pouvant être contacté pour indiquer qu'un dispositif (100) de communication sans fil est perdu et le serveur distant (14) étant conçu pour transmettre une commande d'emplacement distant au dispositif (100) de communication sans fil via un réseau sans fil (28) ; et
- ledit dispositif (100) de communication sans fil, le dispositif (100) de communication sans fil étant conçu pour recevoir la commande d'emplacement distant,
**caractérisé en ce que**
- le dispositif (100) de communication sans fil est conçu pour reconfigurer une ou plusieurs préférences (32) d'utilisateur pour permettre des notifications lors de la réception d'une communication au dispositif (100) de communication sans fil, notamment pour modifier une ou plusieurs préférences (32) d'utilisateur stockées dans une mémoire au sein du dispositif (100) de communication sans fil, et
- le dispositif (100) de communication sans fil est en outre conçu pour recevoir postérieurement à l'étape de la reconfiguration une ou plusieurs préférences (32) d'utilisateur - une communication de l'utilisateur du dispositif (100) de communication et pour activer une notification en réponse à la communication pour permettre à l'utilisateur de localiser le dispositif (100) de communication.
